## Europäisches Patentamt
## European Patent Office
## Office européen des brevets

(19)

(11) Publication number: **0 085 581**
**B1**

(12)

# EUROPEAN PATENT SPECIFICATION

(45) Date of publication of patent specification: **03.01.90**

(51) Int. Cl.⁵: **G 02 F 1/33**

(21) Application number: **83300553.1**

(22) Date of filing: **03.02.83**

(54) Light beam deflector.

(30) Priority: **03.02.82 JP 14781/82**

(43) Date of publication of application:
**10.08.83 Bulletin 83/32**

(45) Publication of the grant of the patent:
**03.01.90 Bulletin 90/01**

(84) Designated Contracting States:
**DE FR GB**

(56) References cited:
**DE-A-2 329 460**
**DE-B-2 057 183**
**US-A-3 609 009**
**US-A-3 614 204**

(73) Proprietor: **HOYA CORPORATION**
**13-12, 1-chome, Nishi-shinjuku**
**Shinjuku-ku Tokyo (JP)**

(72) Inventor: **Horiuchi, Shigenori Nagasaka-ryo of Hoya Corp.**
**1511-10, Nagasaka-kamijo**
**Nagasaka-cho Kitakoma-gun Yamanashi-ken (JP)**
Inventor: **Shinohara, Takeru**
**2971-1, Egusa Sudama-cho**
**Kitakoma-gun Yamanashi-ken (JP)**

(74) Representative: **Coleman, Stanley et al**
**MATHYS & SQUIRE 10 Fleet Street**
**London EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a light beam deflector for selectively emitting first and second output light beams when supplied with an incident light beam.

A conventional light beam deflector of the above type has been disclosed in United States Patent No. 3.609.009 issued to Robert D Lohman et al. The conventional light beam deflector comprises an acousto-optic medium and first and second electroacoustic transducers attached to the acousto-optic medium. In such a deflector, an incident light beam along an optical axis is deflected from the optical axis to be emitted as a first or a second output light beam accordingly as an acoustic wave is selectively supplied from the first or the second transducer. As described below with reference to one of the accompanying drawings, one problem associated with the conventional light beam deflector is that the first and the second output light beams are not adequately isolated from one another. In addition, the conventional light beam deflector requires precise working or machining and is, therefore, expensive.

DE—B—2.057.183 discloses a light beam deflection system wherein the acousto-optic medium is a single crystal of tellurium dioxide formed as a hexagonal body. Transducers are provided on the medium and an optical beam is deflected in two directions by interaction with acoustic waves from the transducers. The wave fronts associated with the acoustic waves are at right angles to each other and to the optical beam and the system is not suitable for use with beams of different wavelength. Moreover, tellurium dioxide has a figure of merit which varies according to the polarisation direction of the light beam. Finally, the transducers are energised simultaneously and problems can arise with spurious signals.

It is an object of this invention to provide a light beam deflector in which there is good isolation between a first and a second output light beam.

Furthermore, it is desirable that such light beam deflectors can be manufactured relatively inexpensively.

It is a further object of this invention to provide a light beam deflector of the type described, which is capable of deflecting a plurality of light beams having different wavelengths.

Accordingly, the present invention provides a light beam deflector comprising a beam generating means for generating an incident light beam, an acousto-optic medium having an incident surface for impingement of said input light beam and an output surface for exit of first and second output light beams, and acoustic wave supply means coupled to said acousto-optic medium for supplying said acousto-optic medium with first and second acoustic waves having first and second acoustic wave fronts, respectively, said acousto-optic medium comprising a hexahedral body having said incident and said output surfaces opposite to each other and first, second, third and fourth side surfaces lying between said incident and said output surfaces, said first side surface being contiguous to said second and said fourth side surfaces and opposite to said third surface, a first electroacoustic transducer being attached to said first side surface and responsive to a first electrical signal for propagating said first acoustic wave into said body, and a second electroacoustic transducer being attached to said second side surface and responsive to a second electrical signal for propagating said second acoustic wave into said body so that the volumes traversed by respective first and second acoustic wave fronts intersect and the wave fronts are at substantially a right angle relative to each other characterised in that the incident light beam has a polarization plane, that the acousto-optic medium consists of tellurite glass so that said hexahedral body has a figure of merit which does not substantially depend on the direction of said polarization plane, that said wave supplying means comprises production means for selectively producing the first and second electrical signals, so that said first and second acoustic waves are selectively supplied to said acousto-optic medium, and that said beam generating means comprise means for supplying said incident light beam to said body with said incident light beam inclined to said first and second acoustic wave fronts at the Bragg angles determined by said incident light beam and said first and second acoustic waves.

The invention will now be described, by way of example, with reference to the accompanying drawings, in which:-

Figure 1 is a schematic view of a conventional light beam deflector;

Figure 2 is a perspective view of a light beam deflector according to a first embodiment of this invention;

Figure 3 is a diagram for use in describing the operation of the deflector of Figure 2; and

Figure 4 is a perspective view of a light beam deflector according to a second embodiment of this invention.

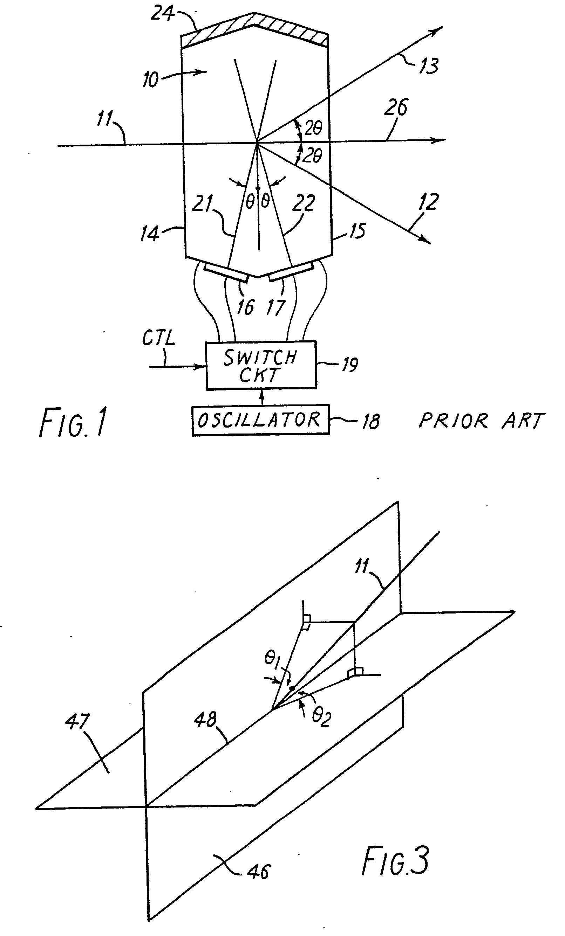

Referring to Figure 1, a conventional light beam deflector similar to that disclosed in the above-referenced United States Patent is illustrated. The light beam deflector comprises an acousto-optic medium 10 responsive to an incident light beam 11 for selectively producing or emitting a first or second output beam 12 or 13. The acousto-optic medium 10 has a hexagonal shape in cross section, with an incident surface 14 for the incident light beam 11 and an output surface 15 which is opposite to the incident surface and through which the first and the second output light beams 12 and 13 exit. The incident light beam 11 is incident on the incident surface 14 of the acousto-optic medium 10 along an optical axis. The acoustic-optic medium 10 is transparent to the incident and the output light beams and can propagate acoustic waves, as will presently become clear. The acousto-optic medium 10 may be, for example, water, quartz, or acousto-optic crystal.

First and second electroacoustic transducers 16 and 17 are mounted on first and second side surfaces of the medium 10 which are adjacent to each other and contiguous to the incident and the output surfaces 14 and 15, respectively. The first and the second electroacoustic transducers 16 and 17 are selectively supplied with a radio frequency electrical signal from an oscillator 18 through a switch circuit 19. The switch circuit 19 is operable in response to a control signal CTL given from a control circuit (not shown) known in the art. As a result, the switch circuit 19 delivers the radio frequency electrical signal to the first or second transducer, 16 or 17, in accordance with the control signal CTL, and the transducer propagates the acoustic wave into the acousto-optic medium 10. Thus, the combination of the transducers 16 and 17, the switch circuit 19, and the oscillator 18 serves to supply the acoustic waves to the acousto-optic medium 10. Herein, the acoustic wave emitted from the first transducer 16 may be called a first acoustic wave indicated by 21 while that emitted from the second transducer 17, a second acoustic wave indicated by 22. Each of the first and the second acoustic waves 21 and 22 has a wavelength corresponding to that of the radio frequency electrical signal.

In the deflector illustrated in Figure 1, an acoustic absorber 24 is attached to those side surfaces of the acousto-optic medium 10 which are opposite to the first and the second side surfaces.

In use of the deflector, the incident light beam 11 is supplied to the acousto-optic medium 10 along the optical axis while the first transducer 16, for example, is energised by the switch circuit 19 to produce the first acoustic wave. Under these circumstances, the first acoustic wave 21 has a first acoustic wave front and it is arranged that this wave front intersects with the incident light beam 11 at the Bragg angle θ, as described in the referenced United States Patent. Consequently, a part of the incident light beam 11 is deflected by an angle of 2θ relative to the optical axis to cause a first-order diffracted beam as the first output light beam 12. An undiffracted, namely a zero-order, light beam 26 appears along the optical axis, and this beam 26 is blocked by the use of a mask (not shown) in a conventional manner. It is to be noted here that the other high-order diffracted or spurious light beams, such as a minus first-order diffracted light beam and the like, are also produced in addition to the first-order and the zero-order light beams, and the incident and the remaining light beams are all present in a common plane.

Alternatively, suppose that the incident light beam 11 is deflected by the second acoustic wave 22 supplied from the second transducer 17 to the acousto-optic medium 10. As shown in Figure 1, the first and the second acoustic waves 21 and 22 are directed at the same angle θ with respect to a plane perpendicular to the optical axis. This means that the second acoustic wave 22 has a second acoustic wave front intersecting with the optical axis or the incident light beam 11 at the Bragg angle θ. Accordingly, a part of the incident light beam 11 is deflected upwardly by an angle of 2θ relative to the optical axis to cause a first-order diffracted light beam as the second output light beam 13, symmetrical with the first output light beam 12. Further light beams, such as a zero-order and a minus first-order light beam, are also produced together with the second output light beam 13. The second output light beam and the remaining light beams all lie in the same plane as the first output light beam and its associated beams.

Consideration should be directed to the fact that the minus first-order diffracted light beams related to the first and the second output light beams are symmetrical with the second and the first output light beams, respectively. More specifically, when the incident light beam 11 is deflected by the use of the first acoustic wave, the minus first-order diffracted light beam appears in the same direction as the second output light beam and vice versa. This is undesirable as it is difficult to isolate the first output light beam 12 from the second output light beam 13 without the minus first-order diffracted light beam related to beam 13 accompanying beam 12 and, vice versa, isolation of beam 13 from beam 12 is difficult. It is difficult to apply the conventional deflector to an optical switch which is used in a light communication system and which requires excellent isolation.

Moreover, the acousto-optic medium 10 should be precisely processed to make both of the wave fronts intersect with the incident light beam 11 at the Bragg angle θ. As known in the art, the Bragg angle θ is determined by calculating a sine of θ which becomes equal to a wavelength of a light beam divided by a factor of twice the wavelength of an acoustic wave. In any event, the Bragg angle is dependent on the wavelengths of the light beam and the acoustic wave. If the wavelength of the incident light beam were to be varied it would be necessary to modify the acousto-optic medium. This means that light beams having different wavelengths cannot be deflected by the use of the conventional deflector as illustrated in Figure 1.

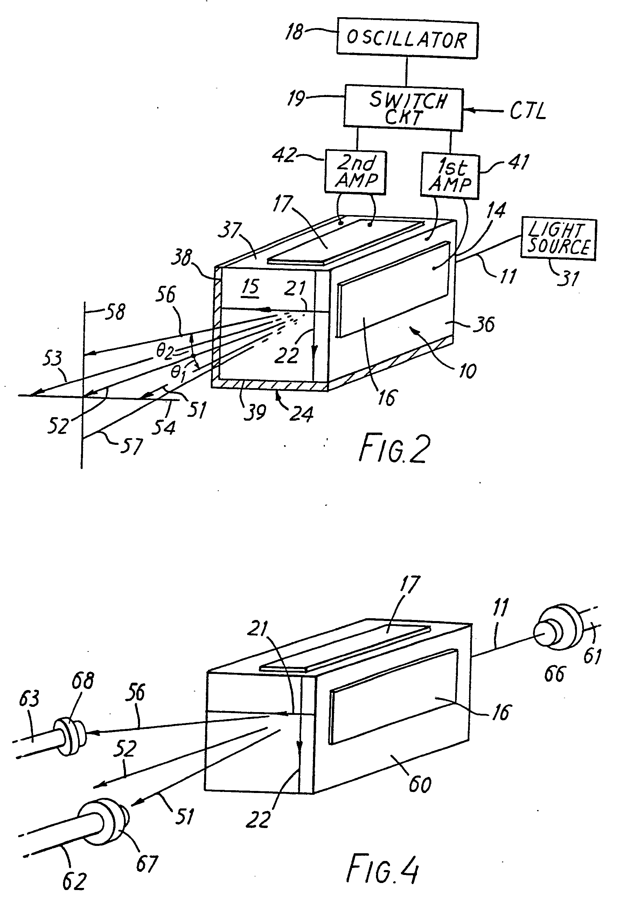

Referring to Figure 2, a light beam deflector according to a first embodiment of this invention comprises similar parts to the deflector of Figure 1 designated by like-reference numerals and is for use in combination with a light source 31, such as a helium-neon gas laser, for emitting a light beam 11 which is incident on an acousto-optic medium 10 as described below. The illustrated acousto-optic medium 10 is in the form of a parallelpiped having a size of 10×10×20 mm. The material of the medium is tellurite glass which is transparent to the incident light beam 11. The acousto-optic medium 10 has a first surface 14 for receiving the incident light beam 11, a second surface 15 opposite to the first surface, and first, second, third, and fourth side surfaces 36, first, second, third, and fourth side surfaces 36, 37, 38 and 39 lying between the first and second surfaces 14 and 15. As shown in Figure 2, the first side surface 36 is adjacent to the second and the fourth side surfaces 37 and 39 and is opposite to the third side surface 38. Also, in this example the first side surface 36 intersects with the second side surface 37 at a right angle.

First and second electroacoustic transducers 16 and 17 are attached to the first and the second side surfaces 36 and 37, respectively, and are connected to first and second amplifiers 41 and 42, respectively. The first and second transducers 16 and 17 may comprise a piezoelectric material, such as niobic acid lithium or the like. The first and the second amplifiers 41 and 42 are connected through switch circuit 19 to oscillator 18. The switch circuit 19 and the oscillator 18 are put into operation in a manner similar to those illustrated in Figure 1. The first and the second amplifiers 41 and 42 serve to supply selectively a first and a second electrical signal to the first and the second transducers 36 and 37 in co-operation with the switch circuit 19 and the oscillator 18, respectively. Preferably, each of the amplifiers 41 and 42 has a high gain.

The first and second electroacoustic transducers 16 and 17 are responsive to the first and second electrical signals and first and second acoustic waves 21 and 22 are selectively propagated in the directions of the third and the fourth side surfaces 38 and 39, respectively. The first and the second acoustic waves 21 and 22 have first and second acoustic wave fronts substantially parallel to the first and the second side surfaces 36 and 37, respectively. It will be readily understood that the volumes of the medium 10 traversed by the first and second acoustic wave fronts intersects and that the wave fronts are at substantially a right angle relative to each other.

Referring now to Figure 3, the first and second acoustic wave fronts of the first and the second acoustic waves 21 and 22 are depicted at 46 and 47, respectively. The first and second acoustic wave fronts 46 and 47 are at substantially a right angle relative to each other. A line 48 between the acoustic wave fronts 46 and 47 is indicated. As illustrated with respect to the line 48, the incident light beam 11 is incident to both of the first and the second acoustic wave fronts 46 and 47 at oblique angles $\theta_1$ and $\theta_2$, each of which is substantially equal to the Bragg angle. Inasmuch as the Bragg angle is dependent on the wavelengths of both of the incident light beam 11 and the acoustic waves 21 and 22 as mentioned before, it is readily possible to supply the incident light beam 11 at the Bragg angle with respect to both the first and the second wave fronts 46 and 47. The angles $\theta_1$ and $\theta_2$ can be controlled by moving the light source 31 by the use of a well-known angle adjusting mechanism (not shown). Thus, a combination of the light source 31 and the adjusting mechanism is operable to adjust the incident light beam 11 to the Bragg angles.

Returning to Figure 2, the third and the fourth side surfaces 38 and 39 which are opposite to the first and the second side surfaces 36 and 37, respectively, are covered with acoustic absorber 24 of, for example, aluminium. The acoustic absorber 24 serves to absorb the first and the second acoustic waves 21 and 22 so that no reflected waves return in the directions of the first and second side surfaces 36 and 37.

The operation of the light deflector illustrated in Figures 2 and 3 will now be described. Suppose that the first electroaccoustic transducer 16 alone is energised by the first electrical signal supplied from the oscillator 18. The incident light beam 11 along the optical axis is incident to the first wave front 46 at the Bragg angle $\theta_1$, as illustrated in Figure 3. Accordingly, the incident light beam 11 is partly diffracted by the first acoustic wave 21. As a result, a first-order diffracted light beam 51 is produced as the first output light beam from the output surface 15.

In practice, the above-mentioned condition relating to the Bragg angle cannot be completely satisfied because the incident light beam 11 is inevitably scattered. Spurious light beams inescapably appear together with the first-order diffracted beam 51. In Figure 2, a zero-order light beam 52 which is transmitted through, or permeates, the acoustic medium 10 is shown as one of the spurious light beams along with a minus first-order diffracted light beam 53 symmetrical with the first-order diffracted light beam 51. The zero-order light beam 53 defines the optical axis. The other diffracted light beams are omitted from this figure.

The first-order and the minus first-order diffracted light beams 51 and 53 and the zero-order light beam 52 all lie in a first plane, as suggested by a line 54 on the lefthand side of Figure 2. The first plane 54 is determined by the first-order diffracted light beam 51 and the optical axis defined by the zero order light beam 53.

Likewise, the first-order diffracted light beam 56 appears as the second output light beam when the second transducer 17 alone is energised by the second electrical signal. Simultaneously, a zero-order light beam, also depicted by the reference numeral 52, and a minus first-order diffracted light beam 57 appear as spurious light beams. These light beams 56, 52 and 57 all lie in a second plane, as suggested by a line 58. The second plane 58 is determined by the first-order diffracted light beam 51 and the optical axis is substantially orthogonal to the plane 54.

It will be readily understood from the foregoing that the minus first-order diffracted light beams 53 and 57 appear on different planes (as indicated by 54 and 58, respectively) relative to each other when the first and the second electroacoustic transducers 16 and 17 are selectively energised. This means that no spurious light beams appear on a specific plane defined by both of the first-order diffracted light beams 51 and 56. With this deflector, isolation between the first-order diffracted light beams is considerably improved, and spurious light beams are readily removed or separated if an optical sensor is located on the specific plane defined by the first-order diffracted light beams.

Inasmuch as the angles $\theta_1$ and $\theta_2$ of the incident

light beam 11 may be changed by the adjusting mechanisms, as described above, various light beams having different wavelengths may be incident to the illustrated deflector.

When the acousto-optic medium 10 is composed of a material, such as tellurite glass, in which a figure of merit is not substantially dependent on the directon of a polarisation plane of the incident light beam 11, the intensities of the two output beams do not vary with optical rotation thereof and the directions of polarisation planes of the output beams are kept unchanged between the incident and the output beams.

Figure 4 illustrates a light beam deflector according to another embodiment of this invention, comprising a deflector element 60 similar in structure to that illustrated in Figure 2. The light beam deflector further comprises a first optical fibre 61 optically coupled to the deflector element 60 for providing the incident light beam 11 and second and third optical fibres 62 and 63 for receiving the first-order diffracted light beams 51 and 56, respectively. The first optical fibre 61 is attached to a case or panel (not shown) by the use of a connector 66 to define the direction of the incident light beam 11, and the second and third optical fibres 62 and 63 are fixed to another case or panel (also not shown) by connectors 67 and 68, respectively. The second and the third optical fibres 62 and 63 are located on the paths of the first-order diffracted light beams 51 and 56 to define the directions thereof.

In this structure, the incident light beam 11 is emitted to impinge on the deflector element 60 at the aforementioned Bragg angles through the first optical fibre 61 and is selectively diffracted by the first and second acoustic waves 21 and 22 propagated from the first and second electroacoustic transducers 16 and 17, respectively. Consequently, the first-order diffracted light beams 51 and 56 are selectively received by the second and the third optical fibres 62 and 63, respectively. Thus, it is possible to remove completely, for practical purposes, the spurious light beams, such as the zero-order light beam, by the use of optical fibres.

With the light beam deflector according to the two embodiments of this invention which have been described, isolation between the two output light beams appearing as the first-order diffracted light beams 51 and 58 is considerably improved compared with prior art deflectors such as the one illustrated in Figure 1. In addition, working of the acousto-optic medium 10 is readily possible when the medium 10 is of parallelpiped form. It is possible to reduce the distance between the incident and the output surfaces as compared with the conventional deflector illustrated in Figure 1. Light beam deflectors embodying the invention can therefore be both inexpensive and compact in comparison with conventional deflectors.

While this invention has been described in relation to two specific embodiments, it will be apparent to those skilled in the art that this invention could be put into practice in various different ways. The angle between the first and second side surfaces of the medium (36 and 37) may be somewhat greater than a right angle. Also, the angle between the third and fourth side surfaces (38 and 39) need not be a right angle in order to absorb the acoustic waves. In this sense, the acousto-optic medium 10 is of a generally hexahedral shape. The acoustic absorber 24 may be of a material having an acoustic impedance approximately that of the acousto-optic medium 10. In order to control the Bragg angles ($\theta_1$ and $\theta_2$), the acousto-optic medium 10 may be moved or a mirror may be used.

## Claims

1. A light beam deflector comprising a beam generating means for generating an incident light beam (11), an acousto-optic medium (10) having an incident surface (14) for impingement of said input light beam and an output surface (15) for exit of first and second output light beams (12, 13), and acoustic wave supply means coupled to said acousto-optic medium for supplying said acousto-optic medium with first and second acoustic waves (21, 22) having first and second acoustic wave fronts, respectively, said acousto-optic medium comprising a hexahedral body having said incident and said output surfaces opposite to each other and first, second, third and fourth side surfaces (36, 37, 38, 39) lying between said incident and said output surfaces, said first side surface being contiguous to said second and said fourth side surfaces and opposite to said third surface, a first electroacoustic transducer (16) being attached to said first side surface and responsive to a first electrical signal for propagating said first acoustic wave into said body, and a second electroacoustic transducer (17) being attached to said second side surface and responsive to a second electrical signal for propagating said second acoustic wave into said body so that the volumes traversed by respective first and second acoustic wave fronts intersect and the wave fronts are at substantially a right angle relative to each other, characterised in that the incident light beam has a polarization plane, that the acousto-optic medium consists of tellurite glass so that said hexahedral body has a figure of merit which does not substantially depend on the direction of said polarization plane, that said wave supplying means comprises production means (18, 19) for selectively producing the first and second electrical signals, so that said first and second acoustic waves are selectively supplied to said acousto-optic medium, and that said beam generating means comprise means for supplying said incident light beam to said body with said incident light beam inclined to said first and second acoustic wave fronts at the Bragg angles determined by said incident light beam and said first and second acoustic waves.

2. A light beam deflector as claimed in claim 1, characterised in that the beam supply means is adapted to direct the incident light beam along an optical axis, said first output light beam and said optical axis defining a first plane and said second output light beam and said optical axis defining a second plane substantially perpendicular to said first plane.

3. A light beam deflector as claimed in claim 2, characterised by output beam receiving means for receiving said first and said second output beams on said first and said second planes, respectively.

4. A light beam deflector as claimed in any preceding claim, characterised in that said third and said fourth side surfaces are covered with an acoustic absorber.

**Patentansprüche**

1. Lichtstrahl-Ablenkvorrichtung mit einer Strahlerzeugungs-Einrichtung zum Erzeugen eines einfallenden Lichtstrahls (11), einem akusto-optischen Medium (10), das eine Einfallsfläche (14), auf die der Eingangs-Lichtstrahl auftritt, und eine Ausgangsfläche (15) aufweist, aus der eine erster und zweiter Ausgangs-Lichtstrahl (12, 13) austritt, und Schallwellen-Liefereinrichtungen, die mit dem akusto-optischen Medium verbunden sind, zum Liefern von ersten und zweiten Schallwellen (21, 22) mit ersten bzw. zweiten Schallwellenfronten an das akusto-optische Medium, wobei das akusto-optische Medium einen hexaedrischen Körper aufweist, der die einander gegenüberliegenden Einfalls- und Ausgangsflächen une eine zwischen der Einfalls- und der Ausgangsfläche liegende erste, zweite, dritte und vierte Seitenfläche (36, 37, 38, 39) aufweist, wobei die erste Seitenfläche an die zweite und die vierte Seitenfläche angrenzt und der dritten Seitenfläche gegenüberliegt, wobei ein erster elektroakustischer Wandler (16) an der ersten Seitenfläche angebracht ist und auf ein erstes elektrisches Signal anspricht zum Einleiten der ersten Schallwelle in den Körper, und wobei ein zweiter elektroakustischer Wandler (17) an der zweiten Seitenfläche angebracht ist und auf ein zweites elektrisches Signal anspricht zum Einleiten der zweiten Schallwelle in den körper, so daß sich die von den jeweiligen ersten und zweiten Schallwellenfronten durchquerten Volumen schneiden und die Wellenfronten im wesentlichen in einem rechten Winkel zueinander sind, dadurch gekennzeichnet, daß der einfallende Lichstrahl eine Polarisationsebene hat, daß das akusto-optische Medium aus Telluritglas besteht, so daß der hexaedrische Körper eine Gütezahl hat, die nicht wesentlich von der Richtung der Polarisationsebene abhängt, daß die Wellen-Liefereinrichtung Erzeugungseinrichtungen (18, 19) aufweist zum wahlweisen Erzeugen der ersten und der zweiten elektrischen Signale, so daß die erste und die zweite Schallwelle wahlweise an das akusto-optische Medium geliefert werden, und daß die Strahlerzeugungs-Einrichtungen Einrichtungen zum Liefern des einfallenden Lichtstrahls an den Körper aufweisen, wobei der einfallende Lichtstrahl im Braggschen Winkel, der durch den einfallenden Lichtstrahl und die ersten und zweiten Schallwellen bestimmt wird, zu den ersten und zweiten Schallwellenfronten ist.

2. Lichtstrahl-Ablenkvorrichtung nach Anspruch 1, dadurch gekennzeichnet, daß die Strahlliefereinrichtung geeignet ist, den einfallenden Lichtstrahl entlang einer optischen Achse zu richten, wobei der erste austretende Lichtstrahl und die optische Achse eine erste Ebene bilden und der zweiten austretende Lichtstrahl und die optische Achse eine zweite Ebene bilden, die im wesentlichen senkrecht zu der ersten Ebene ist.

3. Lichtstrahl-Ablenkvorrichtung nach Anspruch 2, gekennzeichnet durch Ausgangsstrahl-Empfangseinrichtungen zum Empfangen des ersten und des zweiten austretenden Strahls an der ersten bzw. zweiten Ebene.

4. Lichtstrahl-Ablenkvorrichtung nach einem der vorstehenden Ansprüche, dadurch gekennzeichnet, daß die dritte und vierte Seitenfläche mit einem akustischen Absorber abgedeckt sind.

**Revendications**

1. Déflecteur de faisceau lumineux comprenant des moyens de génération de faisceau destinés à produire un faisceau de lumière incident (11), un milieu acousto-optique (10) comportant une surface d'incidence (14) sur laquelle doit tomber le faisceau lumineux d'entrée, et une surface de sortie (15) par laquelle doivent sortir un premier et un second faisceau lumineux de sortie (12, 13). et des moyens de production d'ondes acoustiques couplés au milieu acousto-optique pour appliquer à ce milieu acousto-optique des premier et seconde ondes acoustiques (21, 22) présentant respectivement des premier et second fronts d'onde acoustiques, le milieu acousto-optique étant constitué par un corps en forme d'hexaèdre comportant les surfaces d'incidence et de sortie opposées l'une à l'autre et des première et seconde, troisième et quatrième surfaces latérales (36, 37, 38, 39) se situant entre les surfaces d'incidence et de sortie, la première surfake latérale étant contiguë aux seconde et quatrième surfaces latérales et opposées à la troisième surface, un premier transducteur électro-acoustique (16) étant fixé à la première surface latérale et répondant à un premier signal électrique pour propager la première onde acoustique dans le corps ci-dessus, et un second transducteur électroacoustique (17) étant fixé à la seconde surface latérale et répondant à un second signal électrique pour propager la seconde onde acoustique dans le corps, de façon que les volumes traversés par les premier et second fronts d'onde acoustiques respectifs se coupent, et que les fronts d'onde soient essentiellement perpendiculaires l'un à l'autre, déflecteur caractérisé en ce que le faisceau lumineux incident comporte un plan de polarisation, en ce que le milieu acousto-optique est constitué par un verre de tellure de façon que le corps en forme d'hexaèdre présente une figure de mérite qui ne dépende pas notablement de la direction de ce plan de polarisation, en ce que les moyens de production d'ondes comprennent des moyens de production (18, 19) destinés à produire sélectivement les premier et second signaux électriques, de façon que les première et seconde ondes acoustiques soient appliquée sélectivement au milieu acousto-optique, et en ce que les moyens de production de faisceau comprennent des moyens permettant d'appliquer le faisceau de lumière incident sur le corps de façon que ce faisceau de lumière incident soit incliné par rapport au premier et second fronts d'ondes acoustiques sous des angles de Bragg déterminés par le faisceau de lumière incident et les première et seconde ondes acoustiques.

2. Déflecteur de faisceau lumineux selon la revendication 1, caractérisé en ce que les moyens de production de faisceau sont conçus pour diriger le faisceau de lumière incident le long d'un axe optique, en ce que le premier faisceau lumineux de sortie et l'axe optique définissent un premier plan, et en ce que le second faisceau lumineux de sortie et l'axe optique définissent un second plan essentiellement perpendiculuire au premier plan.

3. Déflecteur de faisceau lumineux selon la revendication 2, caractérisé en ce que les moyens de réception de faisceaux de sortie sont conçus pour recevoir respectivement les premier et second faisceaux de sortie sur les premier et second plans.

4. Déflecteur de faisceau lumineux selon l'une quelconque des revendications précédentes, caractérisé en ce que les troisième et quatrième surfaces latérales sont recouvertes par un absorbant acoustique.

*FIG. 1*     PRIOR ART

*FIG. 3*

1

18 — OSCILLATOR

19 — SWITCH CKT ← CTL

42 — 2nd AMP

41 — 1st AMP

LIGHT SOURCE — 31

*FIG.2*

*FIG.4*